Europäisches Patentamt

European Patent Office

Office européen des brevets

(11) Numéro de publication: **0 388 257**

**A1**

## (12) DEMANDE DE BREVET EUROPEEN

(21) Numéro de dépôt: **90400624.4**

(22) Date de dépôt: **08.03.90**

(51) Int. Cl.5: **B32B 15/08, B32B 27/04, B65D 65/40, A45D 37/00**

(30) Priorité: **16.03.89 FR 8903486**

(43) Date de publication de la demande:
**19.09.90 Bulletin 90/38**

(84) Etats contractants désignés:
**AT BE CH DE DK ES FR GB GR IT LI LU NL SE**

(71) Demandeur: **LES IMPRESSIONS EN CONTINU S.A.**
**163 à 183 rue Benoît Frachon, Z.I. du Prunay**
**F-78500 Sartrouville(FR)**

(72) Inventeur: **Mengard, Michel**
**82 Boulevard Héloîse**
**F-95100 Argenteuil(FR)**

(74) Mandataire: **Rinuy, Santarelli**
**14, avenue de la Grande Armée**
**F-75017 Paris(FR)**

(54) **Produits à base de complexes résistants et inertes aux produits alcoolisés, leur procédé d'obtention et les complexes nécessaires à leur mise en oeuvre.**

(57) Produits à base de complexes résistants et inertes aux produits alcoolisés constitués, dans l'ordre, en partant de la couche en contact avec le produit alcoolisé, pour aller vers l'extérieur, d'une feuille souple et soudable liée par une colle sans solvant monocomposant à chaud à une feuille métallique puis d'une couche de colle sans solvant à deux composants et d'un film imperméable aux gaz, de dimensions stables à l'étirement et permettant si désiré l'impression, et procédé d'obtention.

Application à la réalisation notamment d'étuis ou de pochettes étanches permettant par exemple l'insertion d'un échantillon de produit alcoolisé tel que parfum ou non alcoolisé, dans un magazine.

EP 0 388 257 A1

## Produits à base de complexes résistants et inertes aux produits alcoolisés, leur procédé d'obtention et les complexes nécessaires à leur mise en oeuvre

La présente invention concerne des produits à base de complexes résistants et inertes aux produits alcoolisés, leur procédé d'obtention et les complexes nécessaires à leur mise en oeuvre.

L'industrie cosmétique, en particulier la parfumerie, s'est depuis toujours préoccupée de la diffusion d'échantillons publicitaires de ses produits. C'est ainsi que par exemple des flacons miniatures, des petits tubes de plastique ou de verre ont été utilisés.

Cependant, ceux-ci devaient être nécessairement distribués et, de ce fait, ne pouvaient toucher un public très important. Un moyen de toucher un public très important est la presse, par exemple par insertion d'un échantillon dans un magazine. Dans ce cas, l'échantillon doit nécessairement avoir une forme plate pour pouvoir être inséré dans le magazine sans en modifier l'aspect. Cependant un tel insert est soumis à des contraintes très importantes, par exemple celles dues à l'empilement des magazines. Par ailleurs, pour les produits alcooliques tels que les parfums, l'emballage ne doit pas altérer le contenu et inversement, le contenu ne doit pas altérer ou détruire l'emballage.

A ce jour aucune solution satisfaisante n'avait été proposée pour conditionner de tels produits sous forme liquide, sans imprégnation par exemple d'un textile.

Des essais ont été réalisés pour confectionner de tels étuis en vue de contenir des échantillons de produits alcooliques.

On a essayé par exemple de faire des étuis formés à partir de divers complexes dans lesquels on faisait varier la nature des strates et des colles, aucune ne donnait satisfaction ; on observait alors par exemple des bulles de gaz sur les complexes, preuve d'une mauvaise adhérence des couches entre elles, ou alors des complexes de bel aspect mais les étuis formés ne toléraient pas une compression de quelques centaines de kilogrammes sans éclater, ou alors les colles dénaturaient le produit.

Après de longues recherches, la Demanderesse a trouvé que des produits tels que des étuis ou des pochettes étanches préparés à partir d'un complexe particulier donnaient toute satisfaction.

C'est pourquoi la présente demande a pour objet les produits à base de complexes résistants et inertes aux produits alcoolisés constitués, dans l'ordre, en partant de la couche en contact avec le produit alcoolisé pour aller vers l'extérieur, d'une feuille souple et soudable liée par une colle sans solvant mono-composant à chaud à une feuille métallique puis d'une couche de colle sans solvant à deux composants et d'un film de dimensions stables à l'étirement permettant si désiré l'impression.

Par "complexes", on entend des produits formés de plusieurs couches de différentes structures et qualités.

Par "résistants aux produits alcoolisés", on entend que ces complexes peuvent être mis en contact pendant de longues périodes, voire sous des pressions importantes avec des produits alcoolisés, sans diminution notable de leur résistance.

Par "inertes aux produits alcoolisés", on entend que lesdits produits alcoolisés n'altèrent pas le complexe et, inversement, que le complexe n'altère ni ne dénature le produit alcoolisé, ce qui est essentiel par exemple lorsque les produits à base de complexes doivent contenir un parfum.

La feuille souple et soudable est constituée par exemple de polypropylène cast (pré-étiré), en polypropylène à cinq couches dont deux liants et de préférence en polyéthylène notamment polyéthylène linéaire.

La feuille souple et soudable a une épaisseur calculée en fonction de la surface et de la quantité du produit conditionné. Par exemple, pour un volume de 1,5 ml d'eau de toilette à 80 % d'alcool pris en sandwich entre deux feuilles de complexe, l'épaisseur du polyéthylène est avantageusement de 100 $\mu$m pour chaque feuille de complexe et pour une surface de 100 cm$^2$ environ. On utilise de préférence un polyéthylène linéaire.

La colle sans solvant mono-composant à chaud peut être par exemple une colle polyuréthanne sans solvant notamment réticulant à l'aide de l'humidité atmosphérique. On la dépose avantageusement à raison de 1,9 g/m$^2$ sur la feuille soudable.

La feuille métallique peut être réalisée en tout métal et de préférence en métal léger et bon marché, de préférence en aluminium. Son épaisseur est d'environ 12 $\mu$m.

La colle sans solvant à deux composants peut être par exemple une colle polyuréthanne mixte polyester/polyéther avec catalyseur.

La colle utilisée dans la présente invention, tant la colle mono-composant à chaud que la colle à deux composants sont sans solvant et permettent d'éviter toute réaction olfactive sur le produit.

Le film extérieur peut être par exemple en polypropylène orienté, en polypropylène expansé orienté, en polyamide orienté et de préférence en polyester. De tels films ont avantageusement été orientés ou biorientés, c'est-à-dire pré-étirés, de manière à avoir des dimensions stables à l'étirement.

L'épaisseur de ce film permettant si désiré l'impression est avantageusement de 12 μm. On utilise de préférence un polyester prétraité pour l'impression et le contre-collage.

Pour permettre une meilleure adhérence des couches plastiques à l'aluminium ou une meilleure tenue de l'impression sur le film, la feuille soudable, de même que le film sont avantageusement traités à haute fréquence.

L'invention a plus particulièrement pour objet les étuis ou pochettes étanches tels que définis ci-dessus. De tels étuis ou pochettes sont constitués de deux complexes soudés l'un sur l'autre par la feuille souple et soudable. De manière à supporter de hautes pressions, le bourrelet formé lors de la soudure des complexes l'un sur l'autre a avantageusement environ une épaisseur correspondant à la hauteur qui sépare les deux complexes pour constituer le volume de l'étui ou pochette correspondant au volume du liquide à contenir.

L'invention a également pour objet un procédé d'obtention des produits à base des complexes tels que définis ci-dessus, caractérisé en ce que l'on dépose sur la feuille souple et soudable la colle mono-composant à chaud, assemble sous faible pression ladite feuille soudable avec la feuille métallique, place à environ 30°C de manière à obtenir une réticulation partielle du premier complexe ainsi obtenu, enduit d'une colle sans solvant à deux composants le film imperméable aux gaz de dimensions stables à l'étirement éventuellement imprimé, assemble le film avec le premier complexe, traite à la vapeur d'eau et obtient le complexe recherché que l'on transforme si désiré en le produit voulu.

L'assemblage de la feuille soudable et de la feuille métallique grâce à la colle mono-composant à chaud est avantageusement réalisé sous une pression d'environ 1 kg/cm$^2$ après avoir rendue rugueuse la feuille soudable par un traitement haute fréquence.

L'étuvage est réalisé de préférence entre 25 et 35°C et avantageusement environ 30°C. La durée d'étuvage peut aller par exemple de 6 à 24 heures et de préférence elle est de 12 heures, lorsque l'on presse à 30°C, de manière à n'obtenir qu'une réticulation partielle du premier complexe ainsi obtenu.

Le film extérieur, tant pour permettre l'impression que pour améliorer le collage sur la feuille métallique, est avantageusement préalablement rendu rugueux par un traitement haute fréquence. La colle à deux composants est déposée sur le film éventuellement imprimé avantageusement à une température d'environ 30°C.

Le traitement à la vapeur d'eau favorise une complète polymérisation du premier complexe tout en évitant l'oxydation de la feuille métallique lorsque celle-ci est oxydable, dans le cas d'une feuille d'aluminium par exemple.

La présente demande a aussi pour objet les complexes résistants et inertes aux produits alcoolisés constitués, dans l'ordre, en partant de la couche en contact avec le produit alcoolisé pour aller vers l'extérieur, d'une feuille souple et soudable liée par une colle sans solvant mono-composant à chaud à une feuille métallique, puis d'une couche de colle sans solvant à deux composants et d'un film imperméable aux gaz, de dimensions stables à l'étirement et si désiré permettant l'impression et les complexes obtenus par le procédé ci-dessus décrit.

De tels complexes ont de remarquables qualités : ils ont une parfaite tenue à l'alcool et aux essences naturelles, ils sont olfactivement inertes vis-à-vis des produits alcooliques ci-dessus, ils sont inaltérables par les produits qu'ils renferment et, par exemple, des sachets fabriqués à partir de tels complexes peuvent résister à un test de compression de 6 secondes sous une masse de 1500 kg et à un test de fluage de 5 heures sous une masse de 1000 kg.

De tels complexes sont parfaitement étanches et permettent de maintenir le produit contenu dans de bonnes conditions de conservation.

Les complexes définis ci-dessus ont généralement une perméabilité à la vapeur d'eau inférieure à 0,1 g par m$^2$ et par jour et à l'oxygène inférieure à 0,1 cm$^3$ par m$^2$ et par jour.

Ces complexes ont également une parfaite tenue à la majorité des produits suivants : produits chimiques, produits alcoolisés, jus de fruits grande contenance aux doses individuelles, produits alimentaires sous vide ou réinjection de gaz, cafés sous vide, produits ionisés, produits de laboratoires.

D'une manière générale, les produits ci-dessus peuvent être conditionnés en sachets préformés ou à soudure 4 côtés sur machines verticales et horizontales.

Par ailleurs, de tels complexes permettent une parfaite tenue des encres utilisées pour l'impression extérieure, par exemple après immersion une journée du complexe imprimé dans un produit alcoolisé, il n'y a pas d'altération de l'impression par frottement avec le doigt.

L'impression peut être réalisée soit en mat, soit en brillant.

Lorsque l'on souhaite une impression brillante, l'on dépose les couleurs, de préférence après traitement haute fréquence du film imperméable aux gaz et de dimensions stables à l'étirement du côté du film en contact avec la colle sans solvant à deux composants.

Lorsque l'on souhaite une impression mate, le film imperméable aux gaz de dimensions stables à l'étirement est avantageusement soumis des deux côtés à un traitement haute fréquence puis vers l'extérieur, à l'impression.

Enfin, cette impression est avantageusement recouverte d'un vernis par exemple un vernis de corps réticulable, de manière à protéger les encres et conférer une bonne tenue à la température jusqu'à environ 200° C.

Les exemples suivants illustrent l'invention sans toutefois la limiter, en se référant aux dessins annexés représentant une mise en oeuvre possible du procédé de l'invention.

Exemple 1

Produits de départ

- feuille souple et soudable : polyéthylène linéaire, épaisseur 100 μ ;
- colle sans solvant mono-composant à chaud, type polyuréthanne réticulant à l'eau ;
- feuille métallique : aluminium épaisseur 12 μ;
- colle sans solvant à deux composants type polyester-polyéther ;
- film imperméable aux gaz de dimensions stables à l'étirement : polyester prétraité épaisseur 12 μm ;

La feuille de polyéthylène P est déroulée en 1 à la vitesse de 100 m/minute, soumise en 2 à un traitement haute fréquence en ligne à l'aide d'un générateur HF SOFTAL, enduite en 3 de colle mono-composant à chaud à raison de 1,8 à 2 g/m², pressée en 4 à 1 kg/m² avec la feuille d'aluminium déroulée en 5. Le premier complexe est enroulé en 6 et mis à l'étuve à 30° C pendant 12 heures de manière à n'obtenir qu'une faible réticulation permettant la réalisation du deuxième complexage.

Le film de polyester est imprimé sur machine hélio après traitement dudit film par haute fréquence en ligne de manière à obtenir une impression mate.

Le film ainsi réalisé est mis au repos pendant 48 heures pour permettre la réticulation du vernis spécial.

Le polyester imprimé déroulé en 7 est alors soumis à un traitement haute fréquence en 8. La colle à deux composants est déposée en 9 à raison de 1,4 g/m² sur le film polyester imprimé à une température de 30° C.

Ce film est alors collé sous pression en 10 avec le premier complexe déroulé en 11, soumis à un traitement de vapeur d'eau en 12 et enfin si désiré enroulé pour le stockage en 13.

On obtient ainsi un complexe selon la présente invention.

Exemple 2

Réalisation de pochettes carrées ou rectangulaires

Le complexe est replié par moitié dans le sens de la laize. Une soudure à trois côtés (en U) est réalisée par avances successives. La partie supérieure de la pochette est écartée par des pinces afin de permettre le remplissage avec une eau de toilette pour homme à 85 % d'alcool, ensuite la soudure de fermeture est réalisée, puis découpe verticale. Le bourrelet de polyéthylène a une épaisseur de 250 μm pour une pochette de 112 cm².

Exemple 3

Réalisation de pochettes à la forme du flacon

On met en phase la face avant et la face arrière. Les soudures sont réalisées à la forme du flacon final de manière que le bourrelet de soudure de polyéthylène ait une épaisseur de 250 μm, on soude le fond et les côtés en forme de U, puis on remplit 1,5 ml de produit et enfin on procède à la soudure supérieure de fermeture. La pochette ainsi réalisée passe dans la découpe en forme, en repérage avec l'impression. La pochette a une surface de 112 cm².

Il peut exister autant de fers de scellage et d'outils de découpe qu'il existe de types de flacons (dans la mesure où le flacon à reproduire est réalisable en découpe).

Exemple 4

Encartage des pochettes

Les pochettes réalisées et conditionnées avec le produit alcoolisé sont mises en boîtes de regroupement par 350 ou 400.

Ces boîtes sont acheminées vers les ateliers d'encartage qui peut être manuel ou automatique.

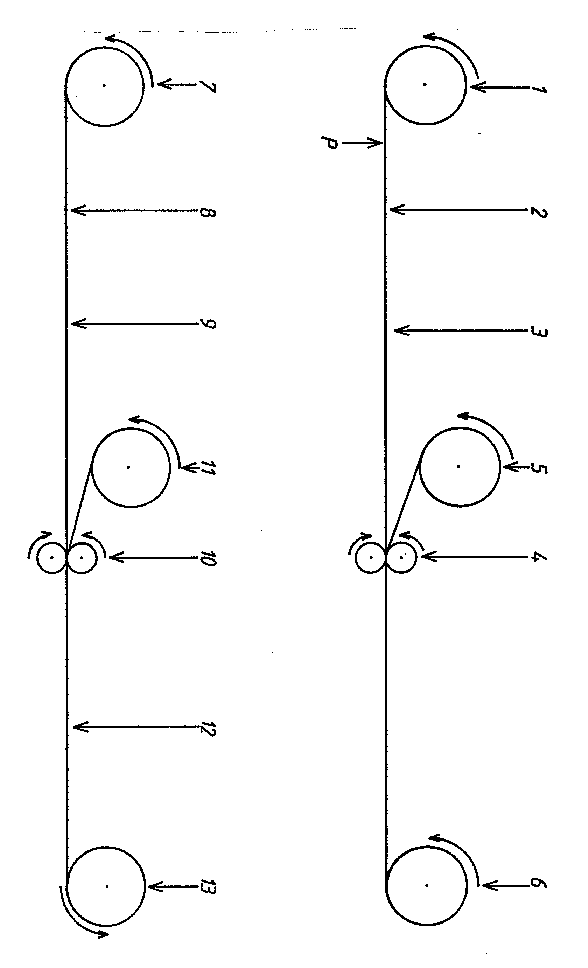

**Revendications**

1. Produits à base de complexes résistants et inertes aux produits alcoolisés constitués, dans l'ordre, en partant de la couche en contact avec le produit alcoolisé, pour aller vers l'extérieur, d'une feuille souple et soudable liée par une colle sans solvant monocomposant à chaud à une feuille métallique puis d'une couche de colle sans solvant à deux composants et d'un film imperméable aux gaz, de dimensions stables à l'étirement et permettant si désiré l'impression.

2. Produits à base de complexes selon la revendication 1, caractérisés en ce que la feuille souple et soudable est en polyéthylène.

3. Produits à base de complexes selon la revendication 1 ou 2, caractérisés en ce que la colle mono-composant à chaud est une colle polyuréthanne sans solvant.

4. Produits base de complexes selon l'une quelconque des revendications 1 à 3, caractérisés en ce que la feuille métallique est une feuille d'aluminium.

5. Produits à base de complexes selon l'une quelconque des revendications 1 à 4, caractérisés en ce que la colle sans solvant à deux composants est une colle polyuréthanne mixte polyester/polyéther avec catalyseur.

6. Produits à base de complexes selon l'une quelconque des revendications 1 à 5, caractérisés en ce que le film imperméable aux gaz, de dimensions stables à l'étirement et permettant l'impression est un film polyester.

7. Produits à base de complexes selon l'une quelconque des revendications 1 à 6, caractérisés en ce que l'épaisseur de la feuille souple et soudable est d'environ 100 $\mu$m, celle de la feuille métallique d'environ 12 $\mu$m, celle du film imperméable aux gaz, de dimensions stables à l'étirement est d'environ 12 $\mu$m, en ce que la colle mono-composant est déposée à raison de 1,9 g/m$^2$ environ et la colle à deux composants à raison de 1,4 g/m$^2$ environ.

8. Produits selon l'une quelconque des revendications 1 à 7, caractérisés en ce qu'ils constituent des étuis ou des pochettes étanches.

9. Procédé d'obtention des produits à base de complexes tels que définis à l'une quelconque des revendications 1 à 8, caractérisé en ce que l'on dépose sur la feuille souple et soudable la colle mono-composant à chaud, assemble sous faible pression ladite feuille souple et soudable avec la feuille métallique, place à environ 30° C de manière à obtenir une réticulation partielle du premier complexe ainsi obtenu, enduit d'une colle sans solvant à deux composants le film imperméable aux gaz et de dimensions stables à l'étirement, assemble le film avec le premier complexe, traite à la vapeur d'eau et obtient le complexe recherché que l'on transforme si désiré en le produit voulu.

10. Procédé selon la revendication 9, caractérisé en ce que :
- l'assemblage de la feuille souple et soudable et de la feuille métallique est réalisé à la pression d'environ 1 kg/cm$^2$ ;
- la feuille souple et soudable a été préalablement rendue rugueuse de préférence par un traitement haute fréquence ;
- la durée d'étuvage est d'environ 12 heures ;
- le film imperméable aux gaz a été préalablement traité par haute fréquence ;
- l'assemblage final est réalisé à une température d'environ 30° C.

11. Les complexes résistants et inertes aux produits alcoolisés constitués, dans l'ordre, en partant de la couche en contact avec le produit alcoolisé pour aller vers l'extérieur, d'une feuille souple et soudable liée par une colle sans solvant mono-composant à chaud à une feuille métallique, puis d'une couche de colle sans solvant à deux composants et d'un film imperméable aux gaz, de dimensions stables à l'étirement et si désiré permettant l'impression.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | DE-U-8 708 307 (HOECHST AG) * Page 4, lignes 3-8; page 2, lignes 16,17; page 3, lignes 5-22,29-30; page 4, lignes 1,2,7,8,12-20 * | 1,2,4-6 ,8,11 | B 32 B 15/08 B 32 B 27/04 B 65 D 65/40 A 45 D 37/00 |
| A | | 7,9,10 | |
| X | GB-A-1 406 447 (KONINKLIJKE EMALLAGE IND. VAN LEER N.V.) * Page 1, ligne 89 - page 2, ligne 64; revendications 1,2,5-12 * | 1,2,4-8 ,11 | |
| A | EP-A-0 229 476 (AMERICAN CAN PACKAGING INC.) * Page 11, lignes 14-17; page 14, ligne 16 - page 15, ligne 10; page 19, ligne 18 - page 20, ligne 8; page 20, ligne 15 - page 21, ligne 7; page 25, ligne 10 - page 26, ligne 1; page 28, lignes 2-4; figure 4 * | 1,4,6-8 ,11 | |
| A | US-A-4 190 477 (OSSIAN et al.) * Colonne 2, lignes 17-37; colonne 3, lignes 4-16; colonne 3, ligne 32 - colonne 4, ligne 4; figure 2 * | 1,2,4-8 | **DOMAINES TECHNIQUES RECHERCHES (Int. Cl.5)** B 32 B |
| A | FR-A-2 149 905 (MILPRINT INC.) * Page 5, lignes 16,17,21,22; page 6, lignes 18,20; page 6, ligne 28 - page 7, ligne 8; page 10, lignes 1-12; page 12, lignes 7-11,29-30; figure 1 * | 1-11 | |

Le présent rapport a été établi pour toutes les revendications

| Lieu de la recherche | Date d'achèvement de la recherche | Examinateur |
|---|---|---|
| LA HAYE | 27-04-1990 | IBARROLA TORRES O.M. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

  & : membre de la même famille, document correspondant

EPO FORM 1503 03.82 (P0402)